# EUROPÄISCHE PATENTANMELDUNG

(11) **EP 1 000 775 A2**
(43) Veröffentlichungstag der Anmeldung: **17.05.2000**
(21) Anmeldenummer: 99120683.0
(22) Anmeldetag: 19.10.1999
(51) Int. Cl.: B60C 23/00

(54) **Reifendruck-Kontroll-Verfahren für Fahrzeuge**

(30) Priorität: 12.11.1998 DE 19852293
(71) Anmelder: Bayerische Motoren Werke Aktiengesellschaft, 80809 München (DE)
(72) Erfinder: Ellmann, Manfred, 84172 Buch Am Erlbach (DE)

(57) **Zusammenfassung**

Bei einem Reifendruck-Kontroll-Verfahren für Fahrzeuge, mit einem Drucksensor in jedem Rad, einer am Rad angeordneten Sendeeinheit und mit einem zentralen Steuergerät zum Überprüfen der mit den Sendeeinheiten aller Räder übertragenen Druckwerte der Fahrzeugräder, wird ein im Fahrzeug gelagertes Rad sendeunwirksam gemacht. Eine funkdichte Umhüllung (1) des Rads (2) kennzeichnet die Vorrichtung zur Durchführung des Verfahrens.

## Beschreibung

Die Erfindung bezieht sich auf ein Reifendruck-Kontroll-Verfahren und eine Vorrichtung zur Durchführung des Verfahrens. Ausgangspunkt für das Verfahren ist das Verfahren, das in Fahrzeugen der Bayerischen Motoren Werke Aktiengesellschaft seit kurzem im Einsatz ist und das die Merkmale des Oberbegriffs von Patentanspruch 1 aufweist.

Bei der Durchführung diese Verfahrens besteht die Möglichkeit, fünf Räder des Fahrzeugs hinsichtlich ihrer Druckwerte zu überprüfen. Neben den vier montierten Rädern handelt es sich bei dem fünftem Rad i. d. R. um das Reserverad. Probleme ergeben sich, wenn weitere Räder im Fahrzeug gelagert werden. Typischerweise geschieht dies im Zusammenhang mit der Umrüstung von Sommer- auf Winterrädern und umgekehrt. Dabei werden die zum Austausch vorgesehenen bzw. ausgetauschten Räder im Fahrzeug gelagert. Mit Hilfe des Steuergeräts lassen sich dann die Druckwerte der montierten Räder nicht überprüfen, da das Steuergerät nicht zwischen montierten und nicht montierten Rädern unterscheiden kann.

Der Erfindung liegt die Aufgabe zugrunde, ein Verfahren der eingangs genannten Art zu schaffen, bei dem auch dann die Druckwerte der montierten Räder überprüft werden können, wenn mehr als ein demontiertes Rad im Fahrzeug gelagert wird.

Die Erfindung löst diese Aufgabe durch die kennzeichnenden Merkmale des Patentanspruchs 1, soweit es sich um das Verfahren handelt. Mit den Merkmalen des Patentanspruchs 4 wird eine kostengünstige Vorrichtung geschaffen, mit der das Verfahren durchgeführt werden kann.

Da die im Fahrzeug gelagerten Räder nicht als Sender in Erscheinung treten, bleibt das Gesamtsystem wirksam, da nur maximal fünf Räder aktiv sind und überprüft werden können. Dadurch besteht auch dann keine Unfallgefahr wegen zu geringen Reifenluftdrucks, wenn Räder im Fahrzeug mitgenommen werden.

Ist der im Rad vorhandene Sender Teil einer kombinierten Sende- Empfangseinheit, bei der die Reifendruckwerte abgefragt werden und wie sie auch aus der DE 3029563 A bekannt ist, genügt es für die Deaktivierung des Senders auch, den Empfänger unwirksam zu machen. Das vom Steuergerät ausgesandte Abfragesignal kann durch das jeweilige Rad nicht mehr empfangen und der Druckwert dann auch nicht mehr ausgesandt werden.

Die Sendeeinheit kann sowohl selbsttätig als auch manuell unwirksam gemacht werden. Für die erste Möglichkeit kann beispielsweise ein Schalter vorgesehen sein, der beim montierten Zustand des Rads seinen Schaltzustand ändert. Eine manuelle Ausblendung eines Rads kann durch einen von Hand zu bedienenden Schalter an jedem der Räder verwirklicht werden.

Zusätzlich zu diesen Lösungen besteht mit Hilfe der im Patentanspruch 4 angegebenen Möglichkeit, mit Hilfe einer funkdichten Umhüllung des Rads dieses sowohl als Sender als auch als Empfänger unwirksam zu machen, eine Lösung, die sich durch einen geringen Herstellungsaufwand auszeichnet.

Die Umhüllung kann vorteilhafterweise aus Aluminiumfolie bestehen. Diese wiederum kann eine aluminiumkaschierte PE-Folie sein.

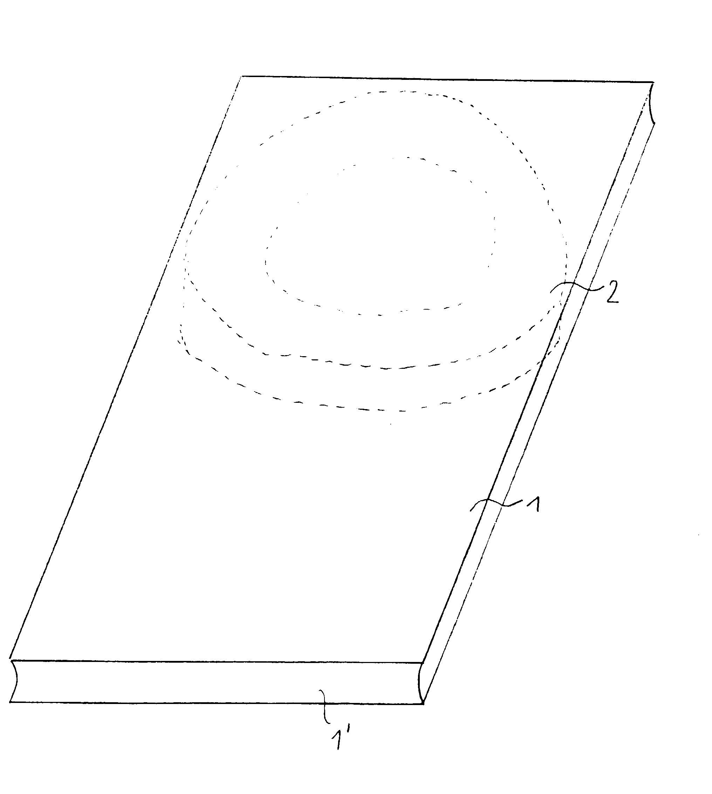

Anhand der Zeichnung ist die Erfindung weiter erläutert. Die einzige Figur zeigt in perspektivischer Darstellung eine erfindungsgemäße Hülle für ein Rad eines Fahrzeugs, das mit einer Sendeeinheit zur Übermittlung des Luftdruckwertes versehen ist.

Die Hülle 1 besteht aus aluminiumkaschierter PE-Folie und besitzt in etwa die dargestellte Gestalt. An ihrer Stirnseite 1' besitzt sie eine Öffnung, durch die ein Rad 2 in die Hülle 1 eingeschoben werden kann. Das Rad 2 ist strichliert dargestellt und besitzt eine nicht dargestellte Sende-/Empfängereinheit sowie einen Sensor zur Bestimmung des Reifenluftdrucks.

Befindet sich das Rad 2 innerhalb der Hülle 1, so erfolgt durch die das Rad 2 vollständig umschließende Hülle eine Abschirmung gegenüber HF-Strahlung. Befindet sich die Hülle 1 zusammen mit dem Rad 2 im Inneren des Fahrzeugs, so kann der im Rad 2 herrschende Reifenluftdruck durch ein nicht dargestelltes Steuergerät nicht abgefragt werden, da die Sende-/Empfängereinheit durch die Abschirmwirkung der Hülle 1 verursacht unwirksam ist. Damit kann das Steuergerät weiterhin die vier montierten Räder des Fahrzeugs sowie ggf. auch ein nicht mit einer derartigen Hülle 2 versehenes Reserverad auf ihren Reifenluftdruck hin abfragen. Das Reifendruck-Kontroll-Verfahren ist auch beim Transport von demontierten Rädern, sofern sie sich jeweils in einer derartigen Hülle 1 befinden, ohne weiteres möglich.

## Patentansprüche

1. Reifendruck-Kontroll-Verfahren für Fahrzeuge, mit einem Drucksensor in jedem Rad, einer am Rad angeordneten Sendeeinheit und mit einem zentralen Steuergerät zum Überprüfen der mit den Sendeeinheiten aller Räder übertragenen Druckwerte der Fahrzeugräder, **dadurch gekennzeichnet,** daß ein im Fahrzeug gelagertes Rad sendeunwirksam gemacht wird.

2. Reifendruck-Kontroll-Verfahren nach Anspruch 1, **dadurch gekennzeichnet,** daß das Rad selbsttätig sendeunwirksam gemacht wird.

3. Reifendruck-Kontroll-Verfahren nach Anspruch 1, **dadurch gekennzeichnet,** daß die Sendeeinheit des Rads manuell unwirksam gemacht wird.

4. Vorrichtung zur Durchführung des Verfahrens nach einem der Ansprüche 1 bis 3, **gekennzeichnet durch** eine funkdichte Umhüllung des Rads.

5. Vorrichtung nach Anspruch 4, **dadurch gekennzeichnet,** daß die Umhüllung eine aus Aluminiumfolie gebildete Hülle ist.

6. Vorrichtung nach Anspruch 5, **dadurch gekennzeichnet,** daß die Aluminiumfolie eine aluminiumkaschierte PE-Folie ist.
